# EUROPÄISCHE PATENTSCHRIFT

(11) **EP 0 760 222 B1**
(45) Veröffentlichungstag und Bekanntmachung des Hinweises auf die Patenterteilung: **05.01.2000**
(21) Anmeldenummer: 96112070.6
(22) Anmeldetag: 26.07.1996
(51) Int. Cl.: A47J 31/06

(54) **Filtermittel zur Filtration von Extraktionsgetränken, insbesondere von Espresso**
Filter for preparing drinks by extraction, in particular espresson
Filtre pour préparer des boissons par extraction, de l'espresso en particulier

(30) Priorität: 02.09.1995 DE 19532481
(43) Veröffentlichungstag der Anmeldung: 05.03.1997
(73) Patentinhaber: Braun GmbH, Kronberg (DE)
(72) Erfinder: Friedrich, Dieter, 65817 Vockenhausen (DE); Seidel, Gunther, 60439 Frankfurt am Main (DE); Machlitt, Michael, 65824 Schwalbach (DE); Eimecke, Rolf, 63179 Obertshausen (DE); Koch, Dieter, 30982 Pattensen (DE); Miltenberger, Christof, 61389 Schmitten (DE); Wirsing, Robert, 63303 Dreieich (DE)

(56) Entgegenhaltungen:
- EP-A- 0 515 245
- GB-A- 1 115 787
- US-A- 1 666 070

## Beschreibung

Die Erfindung betrifft ein Filtermittel zur Filtration von Extraktionsgetränken, insbesondere von Espresso, bestehend aus einem Scheibenelement, das mit einer Vielzahl von Öffnungen versehen ist, durch die von der Zulaufseite her das aus dem Extraktionsgut extrahierte Getränk zur Ablaufseite abfließt.

Filtermittel der angegebenen Art sind bekannt aus DE-A1-23 59 347, DE-A1-41 35 660 und EP-B1-0 309 708. Die bekannten Filtermittel bestehen aus einem Blech, die eine Vielzahl gleichmäßig verteilter Öffnungen von im wesentlichen gleicher Größe haben. Die Öffnungen können eine runde, quadratische oder auch rechteckige Querschnittsform haben und sind jeweils so ausgebildet, daß ihre Mittelachse senkrecht zur Blechoberfläche verläuft und daß ihr Querschnitt in Durchflußrichtung zunimmt. Zur Herstellung der bekannten Öffnungen sind galvanoplastisches Abscheiden oder die Verwendung eines Laserstrahls oder der Fotoätztechnik bekannt. Diese Verfahren sind zeitaufwendig und kostenintensiv.

Es ist außerdem bekannt, zur Herstellung von Espressofiltern ein Blech mittels einer Presse derart zu verformen, daß auf einer Seite Vorsprünge und auf der entgegengesetzten Seite Vertiefungen entstehen. In einem nachfolgenden Arbeitsgang werden die Vorsprünge durch Schleifen soweit abgetragen, daß die darunter befindlichen Vertiefungen Öffnungen bilden. Durch weitere Umformschritte kann anschließend ein nichtperforierter Bereich des Blechs zu einem Topf geformt werden. Ein wesentlicher Nachteil dieses Verfahrens liegt in der großen Streuung der Durchmesser der Öffnungen. Beim Abschleifen der Vorsprünge werden die Löcher durch den sich bildenden Schleifgrat partiell wieder verschlossen, so daß die Herstellung definierter Öffnungsquerschnitte kaum zu erreichen ist.

Weiterhin ist ein Filtermittel der eingangs beschriebenen Art aus der EP-A-0 515 245 bekannt. Bei diesem Filtermittel sind durch Herausstellen mehrerer Schnittflächen aus einem Scheibenelement elastische Zungen gebildet, durch die entsprechend dem Druck an der Zulaufseite mittels elastischer Verformung der Zungen die Öffnungen mehr oder weniger geöffnet werden. Durch die druckabhängige Veränderung der Öffnungen kann sich nicht der gewünschte hohe Druckabfall an den Öffnungen bilden, der zu einer hohen Cremabildung erforderlich wäre.

Der Erfindung liegt nunmehr die Aufgabe zugrunde, ein Filtermittel der eingangs beschriebenen Art zu schaffen, durch das das Crema des Filtrats, insbesondere eines Espressogetränks erheblich verbessert wird. Dabei soll das Filtermittel besonders einfach und kostengünstig herstellbar sein.

Diese Aufgabe wird erfindungsgemäß durch die Merkmale des Patentanspruchs 1 gelöst. Die Herstellung des erfindungsgemäßen Filtermittels ist sehr einfach. Als Ausgangsmaterial dient ein Scheibenelement, vorzugsweise aus nicht rostendem Metall, wobei bei der Verwendung von Metall durch das Herausstellen von Schnittflächen und durch die dachförmigen, zu den Seiten der Schnittflächen angebundenen Durchwölbungen sich Öffnungen ergeben, deren Querschnitte sehr genau sind und die sich auch nicht im Betrieb einer Brühgetränkemaschine unter Druckbeaufschlagung von der Zulaufseite her verändern. Dies wird insbesondere durch die Anbindung der Seitenteile der Durchwölbung an das Scheibenelement erreicht. Auch die Dicke des Scheibenelements spielt dabei, wie bei den herkömmlichen Filtermitteln, keine wesentliche Rolle, d.h., auch dickere Scheibenelemente können mit exakt vorbestimmten Öffnungen nach der Erfindung hergestellt werden. Dies ist bei den Filtermitteln nach dem Stand der Technik nur schwer möglich, da dort Verfahren benutzt werden, die überwiegend nur mit sehr dünnen Scheiben einwandfrei arbeiten. Das erfindungsgemäße Filtermittel ist leicht und billig herstellbar, da auf einem Filterelement viele Öffnungen mit vielen Durchwölbungen in nur einem Arbeitsgang angebracht werden können.

Bei dem erfindungsgemäßen Filterelement nach Anspruch 2 werden die Öffnungen an dem Filterelement so angebracht, daß die aus den Öffnungen austretenden Strahlen des Brühgetränks mehrfach gebrochen werden und dadurch sich zusätzlich ein Mischeffekt einstellt, der einen sehr feinporigen und beständigen Schaum entstehen läßt, wie er insbesondere bei einem Espresso oder einem vergleichbaren Kaffeegetränk als sogenannte "Crema" gewünscht wird. Durch das Einschneiden und Herausstellen der Schnittflächen ergeben sich infolge der Schnittgeometrie im Querschnitt etwa ovale bzw. dreieckförmige Öffnungen, die an ihren Rändern scharf sind und die sich insbesondere zu ihren Rändern hin verjüngen, so daß an diesen Stellen, wenn ein Brühgetränk unter Druck durchgepreßt wird, eine besonders schlagartige Druckentspannung entsteht, durch die die Cremabildung begünstigt wird.

Ein vorteilhaftes Herausstellen der Schnittflächen läßt sich erreichen, wenn an den entgegengesetzten Enden einer einzigen Durchwölbung je eine Öffnung verwendet wird (Anspruch3). Hierdurch lassen sich die Durchlässe besser reinigen und das Filtermittel ist einfacher herstellbar.

Neben der ohnehin bereits durch die Erfindung erzielte gute Cremabildung mittels der erfindungsgemäßen Öffnungen läßt sich durch eine entsprechend gezielte Anordnung der einzelnen Öffnungen zueinander zusätzlich nach den Merkmalen des Patentanspruchs 4 noch ein verbesserter Mischeffekt erreichen.

Weiterhin hat sich als vorteilhaft erwiesen, daß, wenn auf der Ablaufseite des Scheibenelements zwischen einander zugeordneten Öffnungen eine von der Durchwölbung und den Schnittflächen begrenzte Sprühkammer gebildet wird, die Strahlen des Filtrats zunächst aufeinandertreffen, auseinandersprühen und wieder von den Wänden der Sprühkammer zurückgeworfen werden (Anspruch 5). Auch dieser Verwirbelungsprozeß verbessert die Cremabildung.

Das Herausstellen der Schnittfläche aus der Oberfläche des Scheibenelements kann sowohl zur Zulaufseite (Anspruch 6) als auch zur Ablaufseite (Anspruch 7) des Filtermittels erfolgen. Gemäß Anspruch 6 sind dabei auf der Ablaufseite des Scheibenelements keine Durchwölbungen vorhanden, so daß das Scheibenelement bei der Verwendung als Scheibe auch auf ein Trägerelement, beispielsweise einem Siebkorbträger, aufgelegt werden kann. Die Ausbildung der Durchwölbungen auf der Zulaufseite hat sich in der Praxis besonders gut bewährt. Dabei ist die von der Brühkammer nach außen abgewadte Ablaufseite im wesentlichen glatt und eben ausgebildet. Bei dieser Anordnung werden die Sprühkammern nicht vom Espressomehl verschlossen, da die Durchwölbungen die Sprühkammern von der Seite des Espressomehls her abdecken. Hierdurch wird eine Verbesserung des Cremas erreicht.

Bei der umgekehrten Anordnung, wo dann die Durchwölbungen nach außen und die Sprühkammern zur Zulaufseite, also zu der mit Espressomehl befüllbaren Brühkammer hingerichtet sind, wird die Sprühkammer ihrer Funktion nicht mehr voll gerecht, da diese von Espressomehl zumindest teilweise verschlossen wird. Dennoch ergibt sich auch hier aufgrund der im Querschnitt sehr schmalen Öffnungen eine gute Crema.

Die Schnittlinie der Öffnungen kann nach den Merkmalen des Patentanspruchs 8 erfindungsgemäß die Form einer Geraden oder nach den Merkmalen des Patentanspruchs 9 die Form einer gekrümmten Linie haben. Hierdurch ergeben sich einfache Schnittverläufe, die das Herausstellen der Schnittkanten der innerhalb der Geraden oder leicht gekrümmten Linien liegenden Bereiche auf einfache Weise ermöglichen, die dann die Durchwölbungen ergeben.

Dadurch, daß zwei benachbarte Öffnungen auf einem gemeinsamen Kreis liegen (Anspruch 10), läßt sich das Filtermittel besonders einfach herstellen, indem runde Stempel zur Bildung der Öffnungen und zum Ausformen der Durchwölbungen benutzt werden. Selbstverständlich ist es auch denkbar, mehrere Schnittflächen auf einem gemeinsamen Kreis anzuordnen, deren Durchwölbungen dann zentral im Mittelpunkt dieses Kreises verlaufen.

Bei einem Durchmesser von 1 bis 3 mm, vorzugsweise 1,6 mm, haben sich besonders gut funktionierende Filtermittel ergeben (Anspruch 11), die das Espressomehl gut zurückhalten und dennoch das Espressogetränk unter Bildung von Crema passieren lassen.

Gemäß den Merkmalen des Patentanspruchs 12 liegen die Biegeradien der Durchwölbungen auf demselben Durchmesser wie die Schnittflächen der Öffnungen. Hierdurch können runde Stempel zur Ausbildung der Durchwölbungen und Öffnungen benutzt werden, die besonders einfach herstellbar sind. Gleichzeitig ergibt sich auch eine über die Fläche des Filterelements gleichmäßige Siebformgeometrie, die zu einem gleichmäßigem Ablauf des Brühgetränkes aus dem Filterelement führt.

Eine besonders gute Crema ergibt sich durch die Merkmale des Anspruchs 13. Die Toleranzangabe von 0,03 mm ist, wenn ein Formstempel zur Ausbildung der Öffnung und der Durchwölbungen gewählt wird, leicht einhaltbar, da sich die Form der Stempel praktisch nicht ändert und andererseits die Eintauchtiefe der Stempel bei den heutigen Maschinen äußerst genau eingehalten werden kann. Die im wesentlichen dreieckige Form der Öffnungen hat sich besonders bewährt, da sich diese am einfachsten herstellen und deren Maßhaltigkeit sich leicht prüfen lassen. Es sind aber auch durchaus andere Geometrien von Querschnitten der Öffnungen denkbar. Da der Druck in der Brühkammer bei einem Zwei- oder Vier- Tassensieb etwa gleich sein soll, um ein etwa gleichgutes Cremaergebnis zu erhalten, müssen die Querschnitte der Durchlässe bei dem Vier- Tassensieb entsprechend kleiner sein, also bei etwa 400 Durchlässen nur noch eine Höhe von etwa 0,18mm gegenüber 0,21mm bei einem Zwei- Tassensieb.

Nach den Merkmalen des Patentanspruchs 14 werden die Dreiecke von rechtwinkligen Dreiecken gebildet, wobei deren rechter Winkel vorteilhafterweise in der Spitze der dachförmig ausgebildeten Durchwölbung liegt.

Zur leichteren Herstellung sind die Merkmale des Patentanspruchs 15 vorgesehen. Auch durch diese Maßnahmen ergibt sich eine übersichtliche, in gleichmäßigen Reihen aufgeteilte Lochmaßgeometrie, durch die ein gleichmäßiger Abfluß des Brühgetränkes durch das Filtermittel erfolgt. Dabei hat sich ein Abstand zwischen den Durchwölbungen von etwa 2 bis 3 mm bewährt.

Als besonders vorteilhaft sind die Merkmale des Patentanspruchs 16 anzusehen, da hiermit leicht zwei Öffnungen am Ende jeder Durchwölbung angebracht werden können. Durch den geraden Verlauf des höchsten Bereiches der Durchwölbungen wird auch die Belastung der Werkzeuge zur Herstellung der Öffnungen gering gehalten, denn punktuelle Erhebungen verschleißen die Werkzeuge schneller.

Dadurch, daß die Durchwölbungen abwechselnd senkrecht und horizontal zueinander verlaufen, kann das Getränk gleichmäßiger an den Öffnungen abfließen (Anspruch 17).

Das Herstellen der Einschnitte erfolgt erfindungsgemäß in einem einzigen stanztechnischen Verfahren, denn gerade hierdurch werden die Schnittflächen an ihren Innenkanten Kanten so ausgerissen, daß äußerst scharfe Kanten an den die Öffnungen begrenzenden Rändern entstehen (Anspruch 18). Dabei werden die Durchwölbungen gleichzeitig mitausgeformt, denn gerade hierdurch ist es möglich, mittels der im wesentlichen dreieckförmigen Geometrie beim Stanzen auf kleinstem Raum Öffnungen zu erreichen, während die tiefergelegenen Bereiche noch ausreichend mit dem Bodenteil des Scheibenelements verbunden sind.

Weiterhin ist es von Vorteil, daß zur Herstellung der Durchwölbungen und der Öffnungen zylindrische Stanz- Präge- Stempel mit angeschrägten Flächen verwendet werden (Anspruch 19). Hierdurch wird die Herstellung des Schnittwerkzeuges einfach und kostengünstig. Dabei können die Stempel auch so ausgestaltet sein, daß zwei benachbarte Öffnungen einer Durchwölbung mit Hilfe des gleichen Stempels geschnitten bzw. gestanzt, gebogen und gleichzeitig kaltverformt werden, wobei ihre Schnittlinien auf einem gemeinsamen Kreis liegen.

Die Erfindung wird nachfolgend anhand zweier Ausführungsbeispiele näher erläutert, die in der Zeichnung dargestellt sind. Es zeigen:
- Fig. 1: einen Querschnitt durch eine Durchwölbung mit zwei Öffnungen eines erfindungsgemäßen Filterelements gemäß der Schnittführung I - I nach Fig. 3, in vergrößertem Maßstab,
- Fig. 2: einen Querschnitt durch eine Durchwölbung gemäß der Schnittführung II - II nach Fig. 3,
- Fig. 3: eine Draufsicht auf einen Ausschnitt eines Filtermittels, bei dem nur eine Durchwölbung in vergrößertem Maßstab zu erkennen ist,
- Fig. 4: eine schematische Darstellung eines Schneidwerkzeuges zur Herstellung des Filtermittels gemäß den Fig. 1 bis 3,
- Fig. 5: Schnitt in vergrößertem Maßstab durch ein zweites Ausführungsbeispiel der Erfindung, mit einem in einem Boden eines Siebkorbes bzw.Topfes ausgebildeten Filtermittel und
- Fig. 6: eine Draufsicht von oben auf das Filtermittel im Bereich S nach Fig. 5, nochmals gegenüber Fig. 5 vergrößert dargestellt und
- Fig. 7: Teilschnitt durch zwei Durchwölbungen gemäß der Schnittführung VI - VI nach Fig. 6, nochmals gegenüber Fig. 6 vergrößert dargestellt.

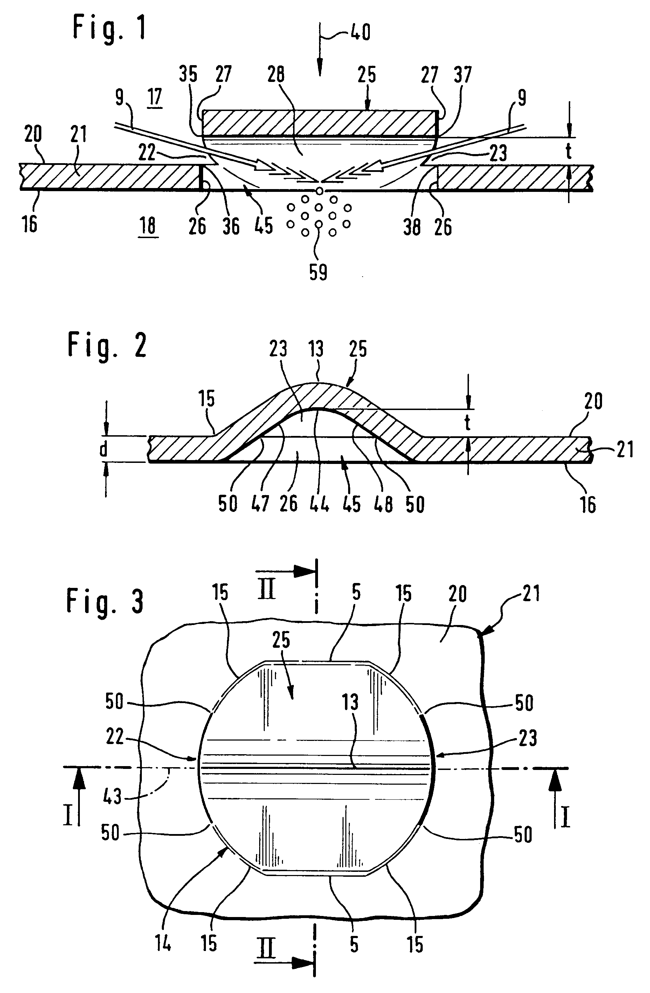

Zur Vermeidung von Wiederholungen wurden in den Fig. 1 bis 7 für entsprechend gleiche Teile gleiche Bezugszeichen gewählt.

Das in den Figuren 1 bis 7 dargestellte Filtermittel 1 besteht aus einem Scheibenelement 21, das die Form einer ebenen Scheibe aufweist, die aus einem Bandmaterial oder aus einem Blech aus Edelstahl ausgeschnitten ist. Das Flächenelement 21 weist eine Vielzahl gleicher Öffnungen 22, 23 auf. Nach den Figuren 1 bis 7 bestehen die Öffnungen 22, 23 aus im Querschnitt dreieckförmigen Schlitzen, die durch Einschneiden bzw. durch Einreißen von Schnittflächen 26, 27 und durch Herausstellen von Durchwölbungen 25 entstehen. Die Öffnungen 22, 23 befinden sich auf der Zulaufseite 17 des Scheibenelements 21 und haben in ihrer Mitte den höchsten Bereich 13, von wo sie dann zu den Enden 50 spitz zulaufen.

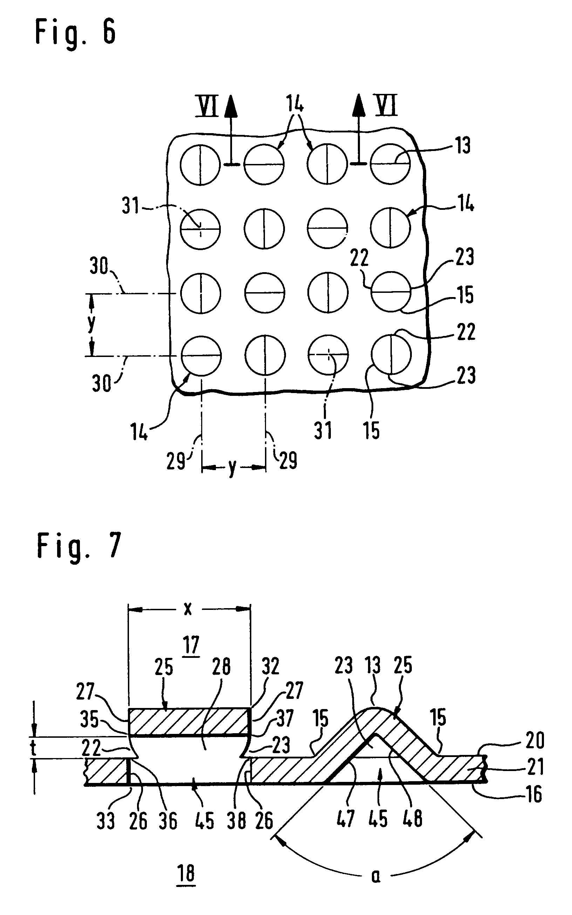

Für die Zubereitung von Espresso hat sich bei einem mit etwa 200 Öffnungen (22,23) versehenen Scheibenelement (21) (Ein- bis Zwei- Tassen- Sieb) eine optimale Höhe t, die von der Oberfläche 20 zur Unterkante 44 des höchsten Bereiches der Durchbrechung 25 der Öffnungen 22, 23 verläuft, von 0,21 mm ± 0,03 mm als besonders geeignet erwiesen. Wie aus den Figuren 2 und 7 ersichtlich ist, weisen die Öffnungen 22, 23 eine im Querschnitt dreieckförmige Fläche auf, wobei der zwischen den hochstehenden Schenkeln 47, 48 der Durchwölbung 25 gebildete Winkel a gleich 90° groß ist. Die Höhe t und der Winkel a bestimmen die Größe der dreieckförmigen Öffnungen 22,23.

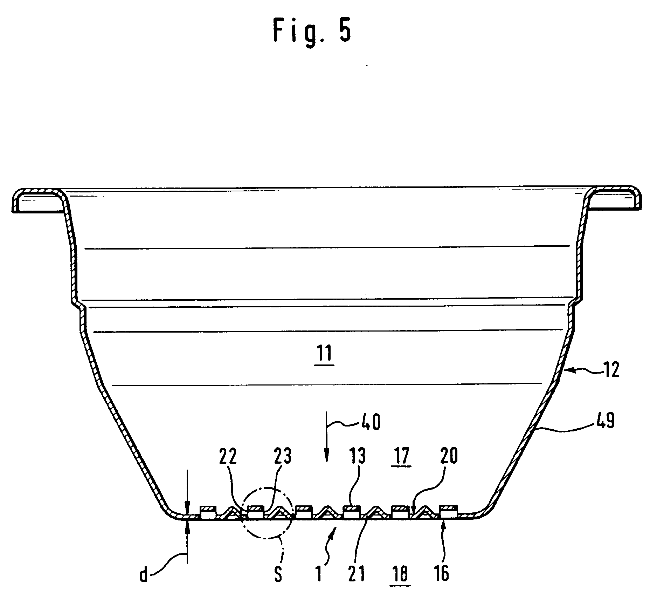

Die Durchwölbung 25 verläuft parallel und mittig zur Horizontalen 43 und ist dachförmig, zu beiden Seiten fallend, ausgebildet. Die Durchwölbung erhebt sich von der Oberfläche 20 nach oben zur Zulaufseite 17 hin, wie dies die Figuren 1 und 5 deutlich zeigen. Die Schnittflächen 26, 27 sind so geschnitten, daß sie senkrecht übereinander verlaufen; sie bilden an den die Öffnungen 22,23 begrenzenden Flächen Schneidkanten 35, 36 bzw. 37, 38. Die nach unten zeigende Oberfläche 16 des Scheibenelements 21 ist - mit Ausnahme der kreisförmigen Vertiefungen 45 - ansonsten eben ausgebildet. Die Dicke d des Scheibenelementes 21 bzw. des Topfes 12 (Fig.5) beträgt etwa 0,5 mm. Da der Topf 12 aber tiefgezogen ist, kann die Dicke d des Scheibenelements 21 unterschiedlich gegenüber dem topfförmigen Bereich 49 ausfallen. In Fig. 5 ist beispielsweise das Scheibenelement 21 einteilig mit einem sich nach oben anschließenden Topf 12 ausgebildet, der zur Aufnahme von Kaffeemehl (nicht dargstellt) dient.

Wie aus den Figuren weiterhin ersichtlich ist, bildet der von der Durchwölbung 25 herausgestellte Bereich am Übergang zum ebenen Scheibenelement 21 eine Biegekante 15, die nach Fig. 3 kreisförmig mit seitlichen Abflachungen 5 und die nach Fig. 6 vollends auf einem Kreis 14 liegen. Die Kreisabschnitte bzw. Kreise 15 werden nach den Fig. 3 und 6 durch die Öffnungen 22,23 unterbrochen, die in Fig. 1 durch den dick durchgezogenen Bereich angezeigt sind. Die Länge dieser Bereiche ergibt sich aufgrund der Dreiecksdaten für den Querschnitt der Öffnungen 22,23.

Unterhalb der Durchwölbung 25 befindet sich nach den Figuren 1 und 7 eine Sprühkammer 28, die seitlich von den Schnittflächen 26 begrenzt ist. In dieser Sprühkammer 28 wird das über die Öffnungen 22,23 einfließende Espressogetränk - gekennzeichnet durch die in Fig. 1 als Pfeile dargestellten Strahlen 9 - in der Brühkammer 28 vermischt, in der die Strahlen 9 aufeinanderprallen. Dabei sind die Öffnungen 22,23 so ausgebildet, daß die sehr dünnen Strahlen 9 in der Sprühkammer 28 aufeinander treffen. Dieser Effekt wirkt sich auf die Cremabildung begünstigend aus.

In Fig. 6 ist noch zu erkennen, daß jede als höchster Bereich der Durchwölbungen 25 gekennzeichnete Gerade 13 gegenüber der zuvor bzw. der danach in einer Reihe 29,30 angeordneten Gerade 13 jeweils um 90° versetzt angeordnet ist, so daß auch die Öffnungen 22,23 abwechselnd hintereinander jeweils um 90° zueinander versetzt angeordnet sind. Es sind aber auch andere Winkel denkbar. In Fig. 6 liegen die Mittelpunkte 31 der Kreise 14 auf senkrecht und horizontal zueinander verlaufenden Reihen 29, 30 und weisen hier den gleichen Abstand y auf. Dieser Abstand y beträgt im Ausführungsbeispiel etwa 2,5 mm, während die Durchmesser der Kreise etwa 1,6 mm betragen. Es sind aber auch nach der Erfindung durchaus andere Abmessungen möglich.

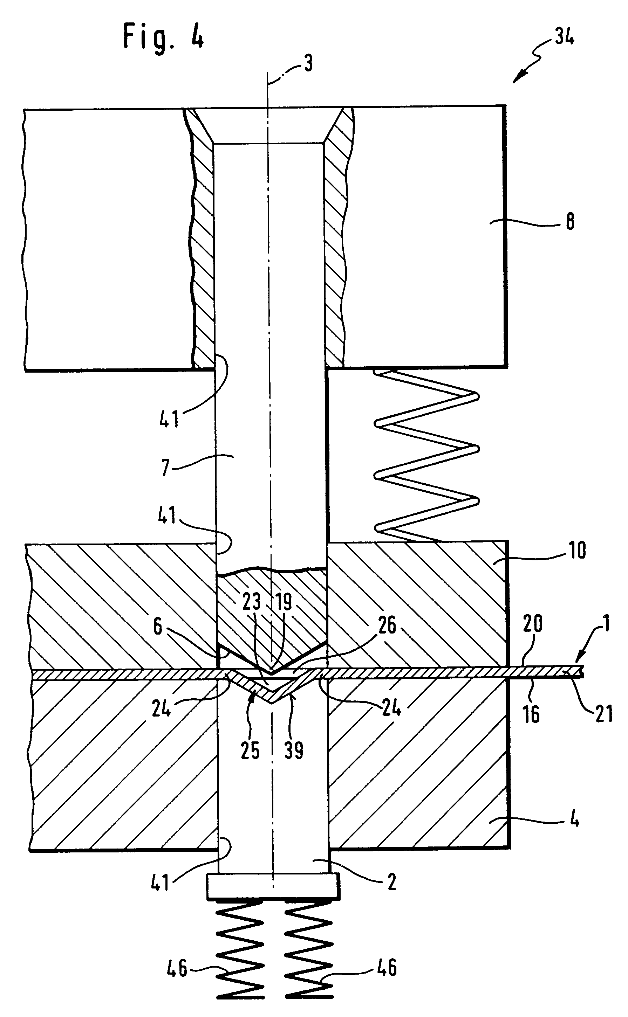

Zur Herstellung der Durchwölbungen 25 und der Öffnungen 22, 23 des Scheibenelementes 21 eignet sich das in Fig.4 dargestellte Schneidwerkzeug 34. Es besteht aus einer Schneidplatte 4, einer Stempelführungsplatte 10 und einem Oberteil 8, an dem die Stempel 7 über die Bohrungen 41 axial verschiebbar sind. Das Schneidwerkzeug 34 ist mit einer der Anzahl der Durchwölbungen 25 entsprechenden Anzahl von Stempeln 7 ausgerüstet. Die Stempel 7 haben die Form zylindrischer Stifte mit an den Seiten angebrachten Abflachungen (nicht dargestellt, da sie vor und hinter der Zeichenebene liegen), die zur Herstellung der Abflachungen 5 in Fig. 3 dienen. Für die in den Figuren 5 bis 7 herzustellenden Filterelemente 1 sind die Stempel kreiszylindrisch ausgebildet.

Die Stempel 7 wirken mit den Bohrungen 41 in der Stempelführungsplatte 10 und der Schneidplatte 4 führend zusammen. Die Schneiden 6 der Stempel 7 liegen in einer 45° zur Längsachse 3 der Stempel 7 geeigneten Ebene, damit bei der richtigen Einschnitttiefe der Stempel 7 das Scheibenelement 21 nur eingeschnitten und die dabei entstehenden Schnittflächen 27 mittels der Durchwölbungen 25 herausgestellt werden. Dabei werden die Durchwölbungen 25 von den Stempeln 7 in die Ausnehmungen 39 der unteren Stempel 2 hineingedrückt, während die Ränder 24 nur über die Biegekante 15 leicht angeknickt bzw leicht angebogen werden, wie dies auch die Figuren 2 und 7 deutlich zeigen. Die unteren Stempel 2 dienen zusätzlich als Auswerfer, um nach einem Schnitt das Scheibenelement 21 von der Schneidplatte 4 zu heben. Unterhalb der unteren Stempel 2 sind starke Federn 46 angeordnet, die die Stöße beim Stanzvorgang am Stempel 2 abdämpfen sollen.

Zur Herstellung des erfindungsgemäßen Filtermitels kann nichtrostendes Stahlblech verwendet werden, das sich zu einem topfförmigen Gebilde, wie es aus Fig. 5 ersichtlich ist, zur Aufnahme von Espressomehl weiterverarbeiten läßt. Dabei wird zunächst der Topf 12 mit dem als Boden ausgebildeten Scheibenelement 21 in einem Fließpressvorgang aus flachem Bandmaterial geformt. Anschließend werden die Öffnungen 22, 23 im Stanzverfahren und die Durchwölbungen 25 sowie die Ränder 15 im Biege-und Prägeverfahren hergestellt. Dieses Verfahren erfolgt in einem einzigen Arbeitsgang, da die Stempel nach Fig.4 eine der Durchwölbung 25 im Filtermittel 1 entsprechende Erhebung 19 mit den am Rand ausgebildeten Schneiden 6 aufweist.

Da das Scheibenelement 21 nach Fig. 4 an ihren Rändern 15 außerhalb der Durchwölbungen 25 fest durch die Platten 4,10 eingespannt ist, kann sich dieser Bereich außerhalb der Ränder 15 nicht verformen, das heißt, jeder Stempel 3 schneidet die Schnittflächen 26 und 27 und bringt sie in der am unteren Stempel 2 ausgebildeten Ausnehmung 39 zur Anlage. Bei dem Stanzvorgang entsteht an den Schnittkanten 35, 36 und 37, 38 ein Stanzgrat, der zur besonderen Cremabildung beiträgt. Nach Herstellung aller zweihundert Öffnungen für ein beispielsweise Ein- bis Zwei-Tassen Filtermittel 1, das heißt, hundert Durchwölbungen 25 und demnach hundert Stempel 7 bzw.2 werden die Platten 10,4 des Schneidwerkzeuges 34 wieder voneinander getrennt und es kann das Filtermittel 1 bzw. der Topf 12 nach Fig. 5 dem Schneidwerkzeug 34 entnommen werden. Die Herstellung der Öffnung 22, 23 ist auf diese Weise äußerst einfach und billig und verläuft in kürzester Zeit ohne spanabhebenden Bearbeitungsvorgang.

Die die Öffnungen begrenzenden Schneidkanten 35, 36, 37, 38 sind durch den Stanzvorgang äußerst scharfkantig ausgebildet, wobei die nach außen weisenden Kanten 32,33 jeder Durchwölbung 25 gerundet verlaufen, was sich bei Stanzvorgang ergibt. Verletzungen an der Oberfläche 20 des Scheibenlements 21 werden also beim Anfassen der Oberfläche 20 vermieden. Das Filtermittel 1 weist bei einem für zwei Tassen geeigneten Topf 12 etwa 200 und bei einem für 4 Tassen geeigenten Topf etwa 400 Öffnungen 22, 23 auf.

Bei der Zubereitung eines Espressogetränkes wird in die in Figur 5 dargestellte Brühkammer 11 zunächst Espressomehl eingefüllt. Anschließend wird der Topf 12 von oben her mittels eines Brühkolbens einer Espressomaschine (nicht dargestellt) dichtend verschlossen und es kann über den Brühkolben heißes Wasser in die Brühkammer 11 einfließen. Dabei wird das Wasser von oben unter Druck durch das Espressomehl gedrückt, wird dort extrahiert und tritt von der Zulaufseite 17 kommend als Brühgetränk 59 in Strömungsrichtung 40 durch die Öffnungen 22,23 des Scheibenelementes 21 an der Auslaufseite 18 aus. Die Öffnungen 22,23 bleiben beim Durchpressen des Getränks durch das Filtrat und anschließend durch die Öffnungen 22,23 in ihrem Querschnitt unverändert, so daß ein größtmöglicher Druckabfall am Ausgang des Filtermittels und somit eine gute Cremabildung erreicht wird.

Das beschriebene Filtermittel 1 ist besonders für die Filtration von heißen Extraktionsgetränken, wie Tee oder Kaffe, insbesondere aber Espresso geeignet. Das Filtermitel 1 hat den Vorteil, daß es einfach und kostengünstig herstellbar ist und daß die sehr kleinen Querschnitte der Öffnungen 22, 23 bei ihrer Herstellung sehr genau eingehalten werden können.

## Patentansprüche

1. Filtermittel (1) zur Filtration von Extraktionsgetränken, insbesondere von Espresso, bestehend aus einem Scheibenelement (21), das mit einer Vielzahl von Öffnungen (22,23) versehen ist, durch die von der Zulaufseite (17) her das aus dem Extraktionsgut extrahierte Brühgetränk (59) zur Ablaufseite (18) abfließt
**dadurch gekennzeichnet**,
daß jede Öffnung (22, 23) durch Schnittflächen (26, 27) in dem Scheibenelement (21) und durch Herausstellen einer Schnittfläche (27) aus der Oberfläche (20) des Scheibenelements (21) gebildet ist und daß sich durch das Herausstellen einer Schnittfläche (27) eine dachförmige, zu den Seiten des Scheibenelements (21) angebundene Durchwölbung (25) ergibt.

2. Filtermittel nach Anspruch 1,
**dadurch gekennzeichnet**,
daß mehrere Öffnungen (22, 23) derart zueinander ausgerichtet sind, daß die aus den Öffnungen ( 22, 23) austretenden Strahlen (9) aufeinandertreffen.

3. Filtermittel nach Anspruch 1,
**dadurch gekennzeichnet**,
daß jede Durchwölbung (25) zu beiden Seiten je eine Öffnung (22, 23) aufweist.

4. Filtermittel nach Anspruch 1,
**dadurch gekennzeichnet**,
daß jeweils zwei Öffnungen (22, 23) einander zugeordnet und derart zueinander ausgerichtet sind, daß die daraus austretenden Strahlen (9) des Brühgetränks (59) aus entgegengesetzten Richtungen aufeinandertreffen.

5. Filtermittel nach Anspruch 3,
**dadurch gekennzeichnet**,
daß von der Durchwölbung (25) zwischen den einander zugeordneten Öffnungen (22, 23) und den unteren Schnittflächen (26) eine Sprühkammer (28) gebildet ist, in der die Strahlen (9) des Brühgetränks (59) aufeinandertreffen.

6. Filtermittel nach Anspruch 3,
**dadurch gekennzeichnet**,
daß die zwischen zwei benachbarten Öffnungen (22,23) liegende Durchwölbung (25) mit beiden Schnittflächen (27) zur Zulaufseite (17) hin aus der Oberfläche (20) des Scheibenelements (21) herausgestellt ist.

7. Filtermittel nach Anspruch 3,
**dadurch gekennzeichnet**,
daß die einander zugekehrten Schnittflächen (26) zweier benachbarter Öffnungen (22,23) zur Ablaufseite (18) hin aus der Oberfläche (17) des Scheibenelements (21) herausgestellt sind.

8. Filtermittel nach Anspruch 1,
**dadurch gekennzeichnet**,
daß die Kontur Schnittflächen (26,27) die Form einer Geraden hat.

9. Filtermittel nach Anspruch 1,
**dadurch gekennzeichnet**,
daß die Kontur Schnittflächen (26,27) die Form einer gekrümmten Linie hat.

10. Filtermittel nach Anspruch 3,
**dadurch gekennzeichnet,**
daß die Schnittflächen (26,27) zweier benachbarter Öffnungen (22,23) auf einemgemeinsamen Kreis (14) liegen.

11. Filtermittel nach Anspruch 10,
**dadurch gekennzeichnet**,
daß der Kreis (14) einen Durchmesser von 1 mm bis 3 mm vorzugsweise 1,6 mm aufweist.

12. Filtermittel nach Anspruch 10,
**dadurch gekennzeichnet**,
daß die beim Herausstellen der Durchwölbungen (25) am Scheibenelement (21) entstehenden Biegeradien (15) auf dem Kreis (14) liegen.

13. Filtermittel nach Anspruch 8,
**dadurch gekennzeichnet**,
daß die Öffnungen (22, 23) einen dreieckförmigen Querschnitt aufweisen, deren Höhe (t) bei einem mit etwa 200 Öffnungen (22,23) versehenen Scheibenelement (21) 0,15 bis 0,25 mm, vorzugsweise 0,21 mm (t) +- 0,03 mm, und bei einem mit etwa 400 Öffnungen (22,23) versehenen Scheibenelement (21) 0,12 bis 0,21 mm, vorzugsweise 0,18 mm (t) +- 0,03 mm, beträgt.

14. Filtermittel nach Anspruch 13,
**dadurch gekennzeichnet**,
daß die Dreiecke der dreieckförmigen Querschnitte der Öffnungen (22, 23) rechtwinklig ausgebildet sind.

15. Filtermittel nach Anspruch 10,
**dadurch gekennzeichnet**,
daß die Mittelpunkte (31) der Kreise (14) in Reihen angeordnet sind, die einen Abstand (y) von 2 bis 4mm, vorzugsweise 2,5 mm, aufweisen.

16. Filtermittel nach Anspruch 10,
**dadurch gekennzeichnet**,
daß der höchste Bereich der Durchwölbungen (25) auf je einer Geraden (13) liegt.

17. Filtermittel nach Anspruch 16,
**dadurch gekennzeichnet**,
daß die in Reihe (30) liegenden Geraden (13) der Durchwölbungen (25) abwechselnd senkrecht und horizontal verlaufen.

18. Filtermittel nach Anspruch 1,
**dadurch gekennzeichnet**,
daß die Öffnungen (22,23) mit Hilfe eines stanztechnischen Verfahrens hergestellt sind.

19. Filtermittel nach Anspruch 18,
**dadurch gekennzeichnet**
daß die Durchwölbungen (25) gleichzeitig während des Stanzvorganges vom Stanz - Prägestempel (7), mitausgeformt werden.

## Claims

1. A filtering means (1) for filtration of extraction beverages, in particular espresso, comprising a disk structure (21) with a plurality of apertures (22, 23) through which a brew (59) extracted from a material to be extracted passes from an afflux side (17) to an efflux side (18),
**characterized in that** each of the apertures (22, 23) is formed by cut edges (26, 27) in the disk structure (21) and by bending a cut edge (27) away from the surface (20) of the disk structure (21), and that such bending up of a cut edge (27) produces a roof-shaped dome (25) joined to the sides of the disk structure (21).

2. The filtering means as claimed in claim 1,
**characterized in that** several apertures (22, 23) are relatively aligned such that the jets (9) exiting from the apertures (22, 23) impinge upon each other.

3. The filtering means as claimed in claim 1,
**characterized in that** each dome (25) has an aperture (22, 23) on either side thereof.

4. The filtering means as claimed in claim 1,
**characterized in that** each two apertures (22, 23) are relatively associated and aligned such that the jets (9) of the brew (59) exiting therefrom impinge upon each other from opposite directions.

5. The filtering means as claimed in claim 3,
**characterized in that** a spray generating chamber (28) is formed by the dome (25) between the relatively associated apertures (22, 23) and the lower cut edges (26), in which chamber the jets (9) of the brew (59) impinge upon each other.

6. The filtering means as claimed in claim 3,
**characterized in that** the dome (25) disposed between two adjacent apertures (22, 23) has both its cut edges (27) bent up away from the surface (20) of the disk structure (21) towards the afflux side (17).

7. The filtering means as claimed in claim 3,
**characterized in that** the facing cut edges (26) of two adjacent apertures (22, 23) are bent up away from the surface (17) of the disk structure (21) towards the efflux side (18).

8. The filtering means as claimed in claim 1,
**characterized in that** the cut edges (26, 27) have contours of a straight line.

9. The filtering means as claimed in claim 1,
**characterized in that** the cut edges (26, 27) have contours of a curved line.

10. The filtering means as claimed in claim 3,
**characterized in that** the cut edges (26, 27) of two adjacent apertures (22, 23) lie on a common circle (14).

11. The filtering means as claimed in claim 10,
**characterized in that** the circle (14) has a diameter of between 1 mm and 3 mm, preferably 1.6 mm.

12. The filtering means as claimed in claim 10,
**characterized in that** the bend radii (15) produced on the disk structure (21) in the process of bending up the domes (25) lie on the circle (14).

13. The filtering means as claimed in claim 8,
**characterized in that** the apertures (22, 23) are of a triangular cross-section of a height (t) of between 0.15 and 0.25 mm, preferably 0.21 mm ±0.03 mm using a disk structure (21) with about 200 apertures (22, 23), and of a height (t) of between 0.12 and 0.21 mm, preferably 0.18 mm ±0.03 mm using a disk structure (21) with about 400 apertures (22, 23).

14. The filtering means as claimed in claim 13,
**characterized in that** the triangles of the triangular cross-sections of the apertures (22, 23) are right triangles.

15. The filtering means as claimed in claim 10,
**characterized in that** the centers (31) of the circles (14) are arranged in rows spaced at a relative distance (y) of between 2 and 4 mm, preferably 2.5 mm.

16. The filtering means as claimed in claim 10,
**characterized in that** the crown areas of the domes (25) lie on straight lines (13).

17. The filtering means as claimed in claim 16,
**characterized in that** the straight lines (13) of the domes (25) of a row (30) extend vertically and horizontally to each other in alternating sequence.

18. The filtering means as claimed in claim 1,
**characterized in that** the apertures (22, 23) are produced by means of a punching process.

19. The filtering means as claimed in claim 18,
**characterized in that** the domes (25) are formed simultaneously with the punching operation by the punching and embossing steels (7).

## Revendications

1. Filtre (1) pour filtrer des boissons par extraction, en particulier de café express, constitué par un élément en forme de disque (21) qui est pourvu d'une multitude d'ouvertures (22, 23) à travers lesquelles la boisson chaude (59) extraite du produit d'extraction s'écoule, depuis le côté entrée (17) jusqu'au côté sortie (18), caractérisé en ce que chaque ouverture (22, 23) est formée par des surfaces découpées (26, 27) dans l'élément en forme de disque (21) et en faisant ressortir une surface découpée (27) hors de la surface (20) de l'élément en forme de disque (21) et en ce que par le fait de faire ressortir une surface découpée (27), on obtient un bombage (25) en forme de toit, relié aux côtés de l'élément en forme de disque (21).

2. Filtre selon la revendication 1, caractérisé en ce que plusieurs ouvertures (22, 23) sont orientées de telle sorte les unes par rapport aux autres que les jets (9) sortant des ouvertures (22, 23) tombent les uns sur les autres.

3. Filtre selon la revendication 1, caractérisé en ce que chaque bombage (24) présente une ouverture (22, 23) respective des deux côtés.

4. Filtre selon la revendication 1, caractérisé en ce que deux ouvertures (22, 23) respectives sont associées et orientées de telle sorte les unes par rapport aux autres que les jets (9) de boisson chaude (59) qui sortent tombent les uns sur les autres depuis des directions opposées.

5. Filtre selon la revendication 3, caractérisé en ce que le bombage (25) forme, entre les ouvertures (22, 23) associées les unes aux autres et les surfaces découpées (26) inférieures, une chambre de pulvérisation (28) dans laquelle les jets (9) de boisson chaude tombent les uns sur les autres.

6. Filtre selon la revendication 3, caractérisé en ce qu'on fait ressortir vers le côté entrée (17) le bombage (25) situé entre deux ouvertures (22, 23) voisines hors de la surface (20) de l'élément en forme de disque (21) avec les deux surfaces découpées (27).

7. Filtre selon la revendication 3, caractérisé en ce qu'on fait ressortir vers le côté sortie (18) les surfaces découpées (26) tournées l'une vers l'autre de deux ouvertures (22, 23) voisines hors de la surface (17) de l'élément en forme de disque (21).

8. Filtre selon la revendication 1, caractérisé en ce que le contour des surfaces découpées (26, 27) a la forme d'une droite.

9. Filtre selon la revendication 1, caractérisé en ce que le contour des surfaces découpées (26, 27) a la forme d'une ligne courbe.

10. Filtre selon la revendication 3, caractérisé en ce que les surfaces découpées (26, 27) de deux ouvertures (22, 23) voisines se trouvent sur un cercle (14) commun.

11. Filtre selon la revendication 10, caractérisé en ce que le cercle (14) présente un diamètre de 1 mm à 3 mm, de préférence 1,6 mm.

12. Filtre selon la revendication 10, caractérisé en ce que les rayons de courbure (15) se formant en faisant ressortir les bombages (25) sur l'élément en forme de disque (21) sont situés sur le cercle (14).

13. Filtre selon la revendication 8, caractérisé en ce que les ouvertures (22, 23) présentent une section triangulaire dont la hauteur (t) est de 0,15 à 0,25 mm, de préférence 0,21 mm (t) ± 0,03 mm pour un élément en forme de disque pourvu d'approximativement 200 ouvertures (22, 23) et de 0,12 à 0,21 mm, de préférence 0,18 mm (t) ± 0,03 mm pour un élément en forme de disque pourvu d'approximativement 400 ouvertures (22, 23).

14. Filtre selon la revendication 13, caractérisé en ce que les triangles des sections triangulaires des ouvertures (22, 23) sont des triangles rectangles.

15. Filtre selon la revendication 10, caractérisé en ce que les centres (31) des cercles (14) sont agencés en rangées qui présentent un écartement (y) de 2 à 4 mm, de préférence 2,5 mm.

16. Filtre selon la revendication 10, caractérisé en ce que la région la plus haute des bombages (25) se trouve sur une droite (13) respective.

17. Filtre selon la revendication 16, caractérisé en ce que les droites (13) des bombages (25), situées en rangées (30), s'étendent en alternance à la verticale et à l'horizontale.

18. Filtre selon la revendication 1, caractérisé en ce que les ouvertures (22, 23) sont réalisées à l'aide d'un procédé de poinçonnage.

19. Filtre selon la revendication 18, caractérisé en ce que les bombages (25) sont formés simultanément par le poinçon de poinçonnage/estampage (7) pendant l'opération de poinçonnage.
